# EUROPÄISCHE PATENTSCHRIFT

(11) **EP 1 045 761 B1**
(45) Veröffentlichungstag und Bekanntmachung des Hinweises auf die Patenterteilung: **18.06.2003**
(21) Anmeldenummer: 99953596.6
(22) Anmeldetag: 26.08.1999
(51) Int. Cl.: B32B 31/20, C09J 7/02

(54) **VERFAHREN ZUR HERSTELLUNG EINER MEHRSCHICHTIGEN AUSWEISKARTE AUS KUNSTSTOFF UND KLEBSTOFFBESCHICHTETE DECKSCHICHT ZUR VERWENDUNG BEI DIESEM VERFAHREN**
METHOD FOR PRODUCING A PLASTIC MULTILAYER IDENTITY CARD AND PRE-GLUED COVERING LAYER USED IN THIS METHOD
PROCEDE POUR PRODUIRE UNE CARTE D'IDENTITE MULTICOUCHE EN PLASTIQUE ET COUCHE DE REVETEMENT ENCOLLEE UTILISEE DANS CE PROCEDE

(30) Priorität: 05.09.1998 DE 19840631
(43) Veröffentlichungstag der Anmeldung: 25.10.2000
(73) Patentinhaber: Orga Kartensysteme GmbH, 33104 Paderborn (DE); Lohmann GmbH & Co. KG, 56567 Neuwied (DE)
(72) Erfinder: FISCHER, Dirk, D-33106 Paderborn (DE); HENN, Ralf, D-56579 Hardert (DE)
(74) Vertreter: Schneiders, Josef, Dipl.-Ing.
(86) Internationale Anmeldenummer: DE9902663
(87) Internationale Veröffentlichungsnummer: WO00013899

(56) Entgegenhaltungen:
- EP-A- 0 348 349
- EP-A- 0 483 087
- WO-A-97/21777
- DE-A- 19 631 283
- US-A- 3 870 582
- US-A- 4 939 036

## Beschreibung

Die Erfindung bezieht sich auf ein Verfahren zur Herstellung von mehrschichtigen Ausweiskarten aus Kunststoff. Dabei weist die Ausweiskarte wenigstens einen Kartenkern aus einer einstückigen, beidseitig bedruckten Kartenkemschicht oder aus wenigstens zwei Kartenkernschichten auf, die dann jeweils einseitig bedruckt sind. Auf jede Seite des beidseitig bedruckten Kartenkerns ist dann eine klebstoffbeschichtete Deckschicht aufzubringen.
Die Kartenschichten werden im Laminationsverfahren miteinander verbunden.

Die klebstoffbeschichtete Deckschicht, die meistens transparent ausgebildet ist, haftet mit ihrer Klebstoffbeschichtung auf dem bedruckten Kartenkern, und dient u.a. dem Schutz des Druckes. Darüber hinaus kann die Deckschicht bspw. bestimmte Additive enthalten, die für eine nachfolgende Laserbeschriftung der Ausweiskarte notwendig sind.

Um die Ausweiskarten optisch aufzuwerten oder aus Sicherheitsgründen oder aus sonstigen Gründen, sind diese immer häufiger beidseitig und nicht nur einseitig bedruckt.

Derartige mehrschichtige Ausweiskarten sind als Scheck- und Bankkarten stark verbreitet. Oftmals werden diese Karten noch mit einem Magnetstreifen oder einem integrierten Schaltkreis (Halbleiterbaustein, Chip) versehen. Ausweiskarten mit Chip werden als Chipkarten oder smartcards bezeichnet. So werden mehrschichtige Ausweiskarten mit Chip im großem Umfang als Zugangsberechtigung im GSM-Mobilfunk verwendet, wo der Ausweiskarteninhaber sich durch Einstecken seiner Ausweiskarte (GSM-Karte) in ein Mobilfunkendgerät gegenüber dem Mobilfunknetz als Zugangsberechtigter ausweist.

Für die Kartenschichten - Kartenkernschichten wie auch Deckschichten - kommen verschiedene Materialien in Betracht: Polyvinylchlorid (PVC), Polycarbonat (PC), Acrylnitril-Butadien-Styrol (ABS), Polyethylenterephthalat (PET, PETG, PETF). Die Wahl der Materialien und damit der Kartenaufbau hängt von verschiedenen Faktoren ab. Diese Faktoren sind bspw.: die gewünschten mechanischen Eigenschaften der herzustellenden Ausweiskarte, das Verhalten bei hohen und niedrigen Temperaturen, die Frage der Bedruckbarkeit, die Frage der Laserbeschriftbarkeit sowie wirtschaftliche und ökologische Vorgaben.

Je nachdem, welcher Kartenaufbau gewählt wurde, sind unterschiedliche Laminationsparameter (Temperatur und Druck, Zeit) erforderlich. Diese hängen insbesondere davon ab, welches Material für die Kartenkernschichten verwendet wird.

Mehrschichtige Ausweiskarten werden hergestellt, indem in einem ersten Schritt entweder die einstückige, beidseitg bedruckte Kartenkernschicht oder die einseitig bedruckten Kartenkernschichten bereitgestellt werden. Dann werden die klebstoffbeschichteten Deckschichten bereitgestellt. Anschließend werden die bereitgestellten Kartenschichten positionsgenau übereinandergelegt und so in eine Laminationspresse eingebracht, wo sie unter Druck und Wärme miteinander verbunden werden. Ein solche Verfahren und eine solche klebstoffbeschichtete Deckschicht sind aus DE-A-19631283 bekannt. Darüber hinaus ist es vorgesehen, die zu laminierenden Kartenschichten über Rollen bereitzustellen und im sogenannten Rollenlaminationsverfahren miteinander zu verbinden.

Dabei ist, insbesondere bei höheren Laminationstemperaturen (>120° C), bei der Lamination von Ausweiskarten mit einem beidseitig bedruckten Kartenkern, ein Problem aufgetaucht, das bei der Lamination von nur einseitig bedruckten Karten nicht vorhanden ist.

Und zwar kommt es oberhalb einer bestimmten Laminationstemperatur bei der Lamination von Ausweiskarten, die einen beidseitig bedruckten Kartenkern (unabhängig davon, ob dieser selbst einstückig oder mehrschichtig ausgebildet ist) in unerwünschter Weise zu einem Verzug (Verschiebung) des bedruckten Kartenkems gegenüber den zu beiden Seiten angeordneten klebstoffbeschichteten Deckschichten, die unmittelbar an den Laminationsblechen anliegen. Der bedruckte Kartenkern und die Deckschichten sind dann nicht mehr postionsgenau zueinander angeordnet und die Außenkontur der Karte entspricht nicht mehr den Vorgaben. Die Karte muß als Ausschuß bewertet werden und ist nicht mehr zu verwenden.

Der Grund für den Verzug des bedruckten Kartenkerns gegenüber den Deckschichten wird darin gesehen, daß während die Deckschichten zu beiden Seiten des zu laminierenden Kartenaufbaus unverrutschbar an den Laminationsblechen anliegen, sich die Klebstoffbeschichtung der Deckschichten ab einer bestimmten Laminationstemperatur zu einem quasi Gleitfilm zwischen dem bedruckten Kartenkern und der Deckschicht ausbildet, auf bzw. zwischen dem der bedruckte Kartenkern sich gegenüber den Deckschichten verschiebt. Dabei wird die Ausbildung eines Gleitfilms durch die Anwesenheit der Druckfarbschicht noch verstärkt.

So ist es auch zu erklären, daß dieses Problem bei der Lamination von Ausweiskarten, wo nur eine Seite des Kartenkerns bedruckt ist, nicht auftritt. Hier liegt die nicht bedruckte Seite des Kartenkerns - ebenso wie die auf der gegenüberliegenden, bedruckten Kartenkernseite angeordnete Deckschicht - unmittelbar und unverrutschbar auf dem Laminationsblech und fixiert damit die Kartenkernschicht, auch wenn sich auf der anderen Seite zwischen der Deckschicht und dem bedruckten Kartenkern ein Gleitfilm gebildet hat. Das Problem tritt auch nicht auf bei Karten, die randseitig nicht bedruckt sind.

Aufgabe der Erfindung ist es, eine mehrschichtige Ausweiskarte der einleitend beschriebenen Art so herzustellen, daß ein Verzug des beidseitig bedruckten Kartenkems gegenüber den Deckschichten auch bei höheren Laminationstemperaturen wirksam vermieden wird, wobei zusätzlich eine hohe Verbundfestigkeit der mehrschichtigen Ausweiskarte erreicht werden soll.

Diese Aufgabe wird durch die kennzeichnenden Merkmale des Patentanspruches 1 gelöst. Der unabhängige Patentanspruch 6 ist auf eine erfindungsgemäß ausgebildete Deckschicht zur Verwendung bei der Herstellung von mehrschichtigen Ausweiskarten gerichtet. Die sich jeweils anschließenden Unteranssprüche enthalten vorteilhafte und förderliche Ausgestaltungen der Erfindung.

Erfindungsgemäß werden klebstoffbeschichtete Deckschichten verwendet, deren Klebstoffbeschichtung mindestens einen die Reibung zwischen der Deckschicht und dem bedruckten Kartenkem während der Lamination erhöhenden Zusatzstoff aufweisen, wodurch eine Verschiebung des bedruckten Kartenkerns gegenüber den Deckschichten wirksam verhindert wird. Als hierfür besonders wirksam haben sich die Zusatzstoffe Silica (SiO₂), Silikate und Calciumcarbonat (CaCO₃) erwiesen. Diese Zusatzstoffe werden bei der Herstellung/Aufbringung der Klebstoffbeschichtung auf die Deckschicht homogen in der Klebstoffbeschichtung dispergiert. Bei der Klebstoffbeschichtung selbst handelt es sich um einen thermoplastischen Klebstoff, z.B. auf der Basis von Polyamiden, Polyestern oder Polyurethanen oder deren Copolymeren. Dabei wird in einer Ausführungsform der Klebstoffbeschichtung nur Silica oder nur Silikat oder nur Calciumcarbonat als Zusatzstoff beigement. In einer alternativen Ausführungsform ist es vorgesehen, der Klebstoffbeschichtung ein Gemisch aus zwei oder mehreren Zusatzstoffen beizumengen. Die Oberflächen der verwendeten Zusatzstoffe können außerdem chemisch modifiziert sein, wodurch bspw. die Einbettung der Zusatzstoffe in das Material der Klebstoffbeschichtung verbessert wird. So ist es es bspw. bei der Verwendung von Silica (SiO2) als Zusatzstoff vorgesehen, Silica mit unterschiedlichen Silanbeschichtungen einzusetzten.
Als Silica kommen die natürlich vorkommenden Silica, wie Sand, Quarz oder Quarzit, oder die synthetischen Silica in Betracht.

Als Silikat wird vorzugsweise Talkum verwendet. Als Calciumcarbonat kommen die natürlichen Calciumcarbonate, wie Kreide oder Kalkstein, oder die synthetisch gefällten Calciumcarbonate in Betracht.

Der Gewichtsprozentanteil der Zusatzstoffe an der Klebstoffbeschichtung beträgt mindestens 0,1% und höchsten 60%.

Durch die Verwendung der erfindungsgemäßen, klebstoffbeschichteten Deckschichten wird die Ausbildung eines Gleitfilms zwischen den Deckschichten und dem bedruckten Kartenkern vermieden. Die verwendeten Zusatzstoffe haben eine vergleichsweise große Oberfläche bezogen auf ihr Gewicht. Die Kettenmoleküle der Klebstoffbeschichtung werden durch die Zusatzstoffe in ihrer Beweglichkeit beeinträchtigt. Außerdem kommt es zu einer Anlagerung von Polymersegmenten der Klebstoffbeschichtung an die Oberfläche der Zusatzstoffe, wodurch auch benachbarte Polymersegmente der Klebstoffbeschichtung hinsichtlich ihrer Beweglichkeit eingeschränkt werden. Insgesamt kann man sagen, daß durch die Anwesenheit der Zusatzsoff die Rheologie der Klebebeschichtung mit Blick auf die Laminationstemperatur dahingehend verändert wird, daß die Viskosität der Klebstoffbeschichtung in für den vorliegenden Verwendungsfall positiver Weise erhöht wird.

Bei mit Silan modifizierten Zusatzstoffen ist außerdem die chemische Vernetzung zwischen polymerspezifischen Silanhaftvermittlergruppen und Polymersegmenten des eingesetzten Klebstoffsystems gegeben, wodurch zusätzlich die Kohäsion (innere Festigkeit) der Klebstofformulierung erhöht wird.

Die erfindungsgemäßen klebstoffbeschichteten Deckschichten mit den oben genannten Zusatzstoffen haben außerdem den Vorteil, daß diese aufgerollt oder übereinander geklebt nicht aneinander festkleben und sich somit leichter abrollen oder vereinzeln lassen als Deckschichten nach dem Stand der Technik.

Damit während der Lamination die Luft zwischen der klebstoffbeschichteten Deckschicht und dem bedruckten Kartenkern entweichen kann, weist die Klebstoffbeschichtung zusätzlich eine Oberflächenrauhigkeit auf.

Anhand der beigefügten Zeichnungen soll die Erfindung nachfolgend weiter erläutert werden. Es zeigt:
- Fig. 1: die zu laminierenden Kartenschichten in Explosionsdarstellung zwischen den Laminationsblechen einer Laminationspresse,
- Fig.2: einen vergrößerten Ausschnitt im Bereich Deckschicht/Kartenkernschicht,

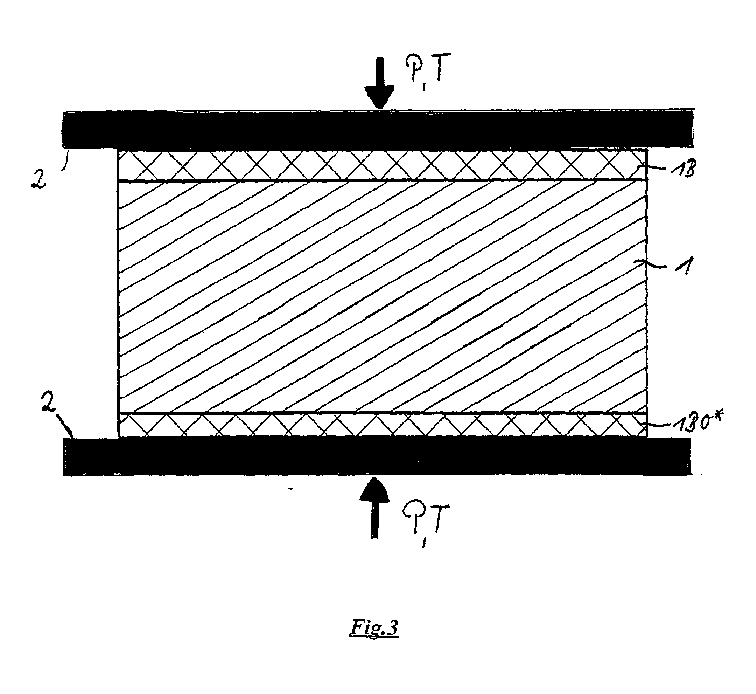

- Fig.3: die zu laminierenden Kartenschichten während der Lamination,
- Fig.4: einen Schnitt durch einen ordnungsgemäß laminierten Kartenbogen gemäß der Erfindung ohne Verzug des Kartenkerns,
- Fig.5: einen Schnitt durch einen laminierten Kartenbogen gemäß Stand der Technik mit Verzug des Kartenkerns,
- Fig.6: eine Draufsicht auf einen bedruckten Kartenkern ohne Deckschicht,
- Fig.7: eine Draufsicht auf einen erfindungsgemäß laminierten Kartenbogen mit Deckschicht,
- Fig.8: eine Draufsicht auf einen nach dem Stand der Technik laminierten Kartenbogen mit Deckschicht.

In Fig. sind die zu laminierenden Kartenschichten - zur Verdeutlichung beabstandet voneinander - zwischen den Laminationsblechen (2) einer Laminationspresse dargestellt. Der Kartenaufbau besteht aus zwei jeweils einseitig bedruckten Kartenkernschichten (1A,1A*) und zwei klebstoffbeschichteten Deckschichten (1B,1B*), die den bedruckten Kartenkern (1) in "Sandwich-Bauweise" zwischen sich einschließen.

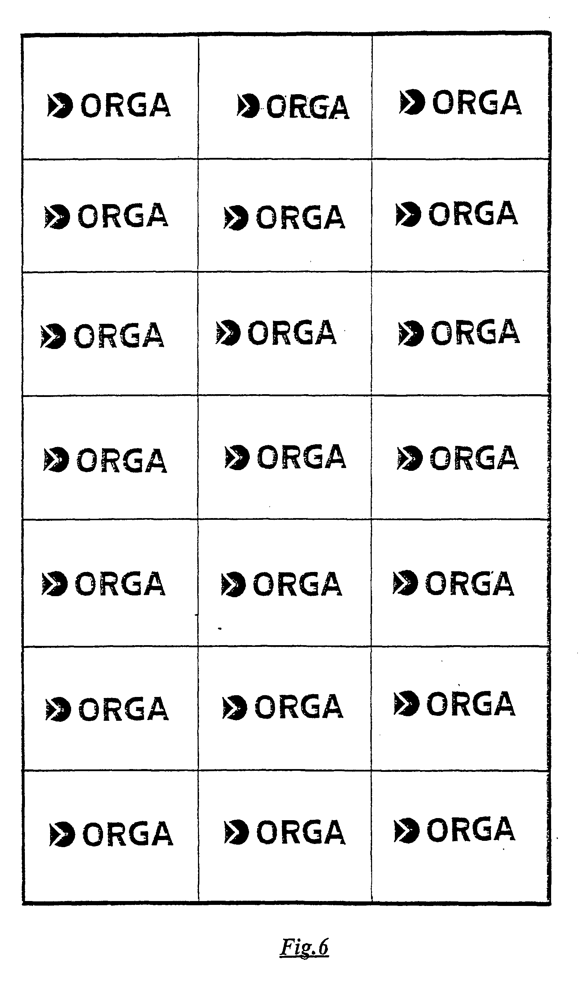

Zur Herstellung des erfindungsgemäß laminierten Kartenkörpers wird in bekannter Weise bevorzugt die sogenannte Mehrfachnutzenfertigung - im Unterschied zur Einzelkartenfertigung - eingesetzt, wodurch der Durchsatz gegenüber der Einzelkartenfertigung sehr viel größer ist. Bei der Mehrfachnutzen-Fertigung werden für jede Kartenschicht Mehrfachnutzen-Bogen (bedruckte Kartenkernschicht-Bogen, klebstoffbeschichtete Deckschicht-Bogen) mit jeweils einer Vielzahl von Einzelelementen zur Herstellung einer Vielzahl von laminierten Kartenkörpern eingesetzt. Für diesen Zweck weisen die bedruckten Kartenkernschicht-Bogen eine Vielzahl identischer Druckbilder aufvgl. Fig.6. Nach der Lamination werden die Einzelkartenkörper durch Ausstanzen aus dem Bogen erhalten. Sowohl in der Einzelkartenfertigung als auch in der Mehrfachnutzen-Fertigung sind die Schichten bzw. Bogen passgenau vor der Lamination übereinander zu legen. Für das erfindungsgemäße Verfahren macht es keinen Unterschied, ob Einzelkartenfertigung oder Mehrfachnutzen-Fertigung oder im Rollenlaminationsverfahren durchgeführt wird.

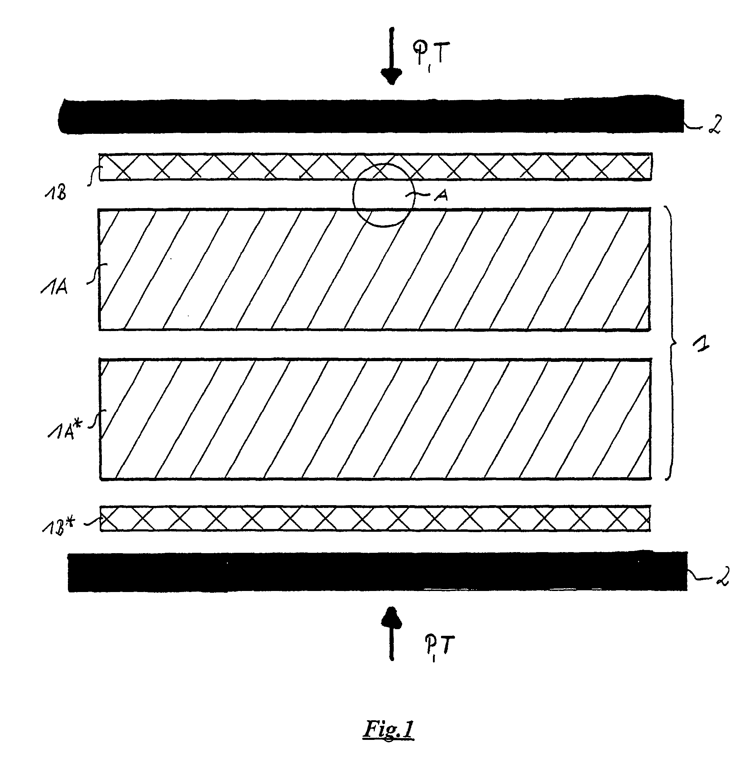

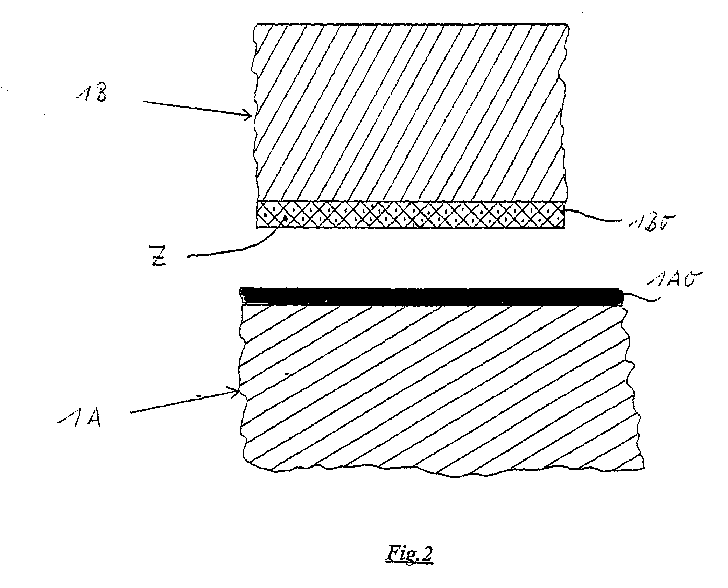

In Fig. 2 ist der Ausschnitt (A) aus Fig. 1 vergrößert dargestellt. Man erkennt die Klebstoffbeschichtung (1B0) auf der Deckschicht (1B) sowie die Druckfarbschicht (1A0) auf der Kartenkernschicht (1A). In der Klebstoffbeschichtung (1B0) befinden sich nun die Zusatzstoffe (Z), die verhindern, daß sich während der Lamination zwischen den Deckschichten (!B0,1B*) und dem bedruckten Kartenkern (1) ein Gleitfilm ausbildet.

Die Dicke der Farbschicht (1A0) beträgt im bspw. Offsetdruck zwischen 2µm und 4 µm; im Siebdruck kann sie bspw. bis zu 10µm betragen. Die Dicke der Deckschicht (1B) - ohne Klebstoffbeschichtung (1B0) - beträgt bspw. zwischen 40µm und 50µm. Die Dicke der Klebstoffbeschichtung (1B0) auf der Deckschicht (1B) beträgt vorzugsweise ca. 6 bis 10µm. Insgesamt kommt für die erfindungsgemäße Klebstoffbeschichtung eine Dicke von 0,1 bis 20 µm in Betracht. Bei einer genormten Kartendicke von 760µm beträgt dann die Dicke der verwendeten einseitig bedruckten Kartenkernschichten (1A,1A*) ca. 320µm.

In einer nicht dargestellten Ausführungsform wird zwischen die beiden einseitg bedruckten Kartenkernschichten noch eine oder zwei weitere unbedruckte Kartenkernschichten eingelegt, wobei die Dicke der einzelnen Schichten dann dementsprechend geringer ist.

Statt zweier jeweils einseitig bedruckter Kartenkernschichten (1A,1A*) kann auch eine einzige einstückige, beidseitig bedruckte Kartenkernschicht verwendet werden.

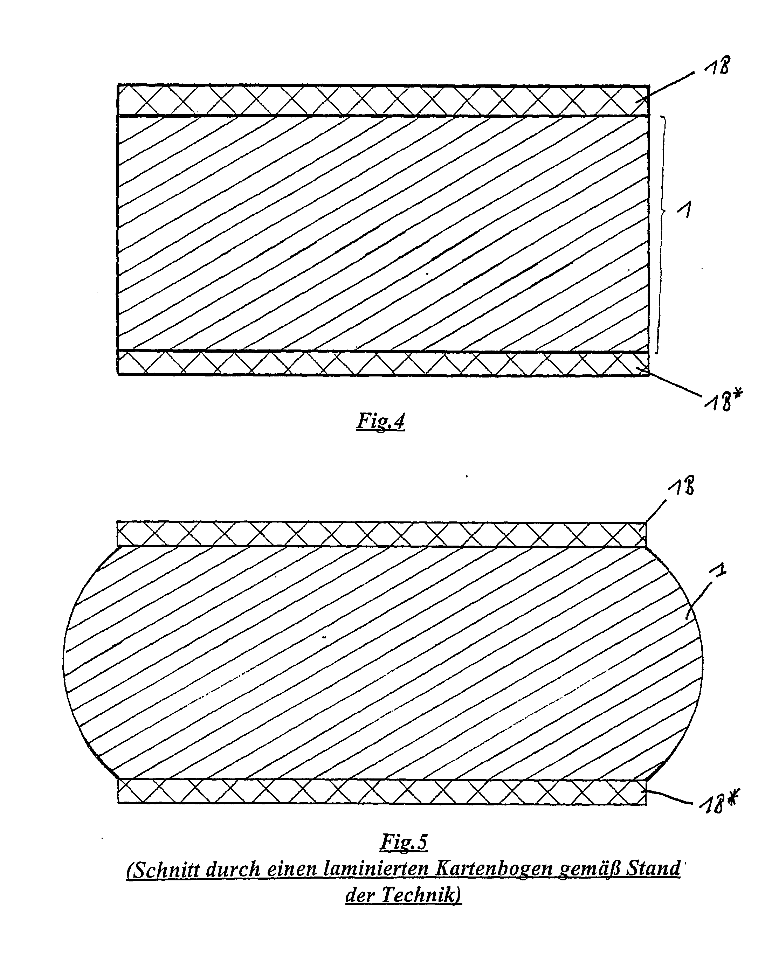

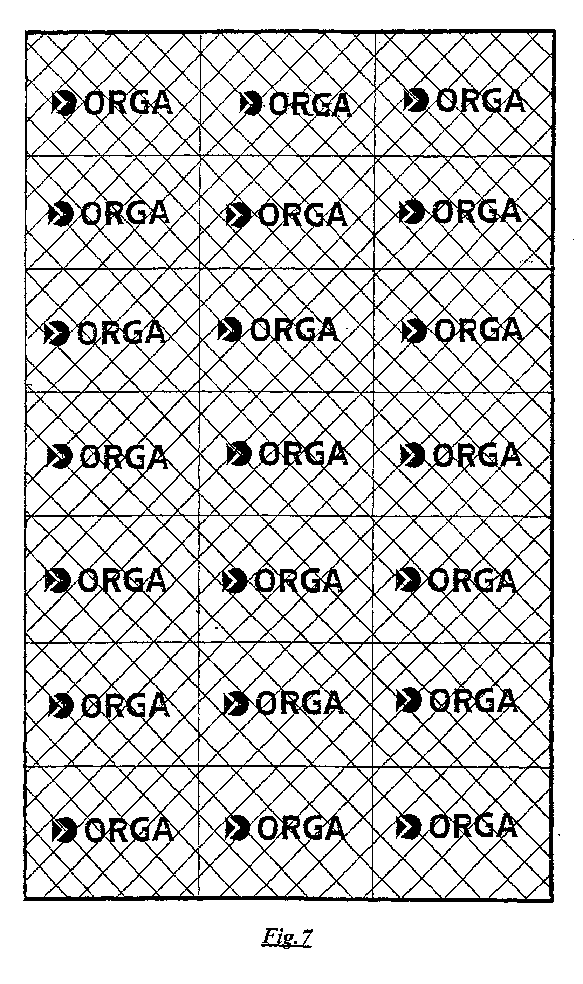

In Fig.4 ist ein Schnitt durch einen ordnungsgemäß laminierten Kartenbogen gezeigt. Die entsprechende Draufsicht ist in Fig. 7 zu sehen. Hierbei gibt es keinen Verzug (Verschiebung, seitliches Herausquellen) des bedruckten Kartenkerns (1) gegenüber den zu beiden Seiten angerodneten Deckschichten (1B,1B*). Dies wird erfindungsgemäß durch die Verwendung von klebstoffbeschichteten Deckschichten (1B, 1B*) erreicht, die Zusatzstoffe (Z) in der Klebstoffbeschichtung (1B0, 1B0*) aufweisen, die die Reibung zwischen dem bedruckten Kartenkern (1) und den Deckschichten (1B0, 1B0*) während der Lamination erhöhen. Der so ordnungsgemäß hergestellte Kartenbogen, wird anschließend nach der Lamination durch Stanzen in die einzelnen Ausweiskarten zerlegt.

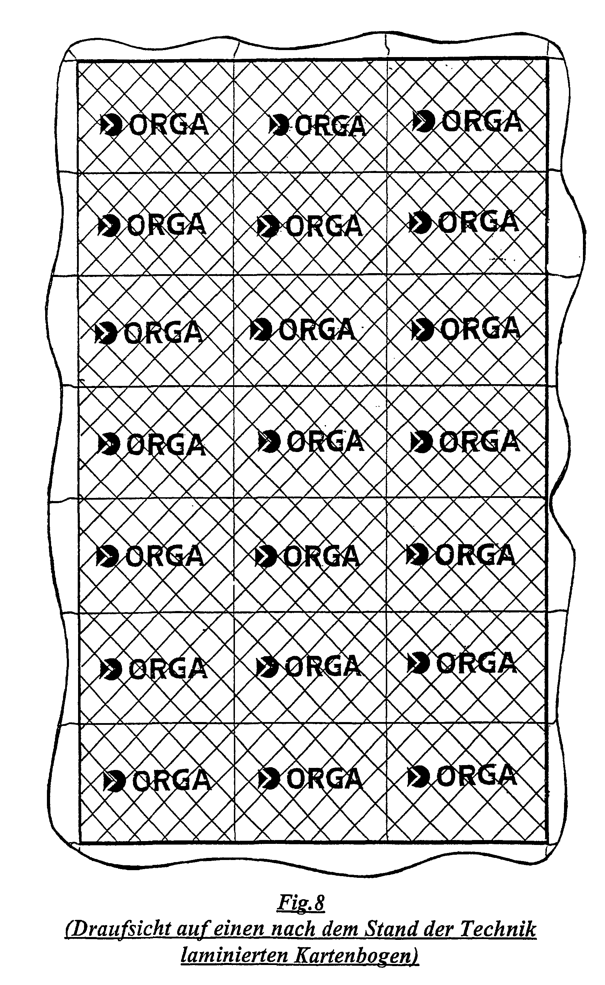

Zur Verdeutlichung ist in Fig. 5 ein Schnitt durch einen laminierten Kartenbogen nach dem Stand der Technik gezeigt, der einen deutlichen Verzug des bedruckten Kartenkerns (1) aufweist. Die entsprechende Draufsicht findet sich in Fig. 8. Der Verzug findet dabei allseitig statt. Neben dem Verzug des Kartenkems (1) an sich wird auch noch das darauf befindliche Druckbild verzogen; d.h. man erhält nach dem Stand der Technik auch ein "verschwommenes" Druckbild.

## Patentansprüche

1. Verfahren zur Herstellung einer mehrschichtigen Ausweiskarte aus Kunststoff, wobei die herzustellende Karte wenigstens einen Kartenkern (1) aus einer einstückigen, beidseitig bedruckten Kartenkernschicht (1A) oder aus wenigstens zwei Kartenkernschichten (1A, 1A*), die jeweils einseitig bedruckt sind aufweist, und auf den bedruckten Seiten des Kartenkerns (1) jeweils eine einseitig klebstoffbeschichtete Deckschicht (1B, 1B0*) aufzubringen ist,
bestehend aus den folgenden Verfahrensschritten:
a) Bereitstellung der einstückigen, beidseitig bedruckten Kartenkernschicht (1A) oder der einseitig bedruckten Kartenkernschichten (1A, 1A*),
b) Bereitstellung der klebstoffbeschichteten Deckschichten (1B, 1B*),
c) das positionsgenaue Übereinanderlegen dieser Kartenschichten (1A, 1A*, 1B, 1B*),
d) das Einbringen der positionsgenau übereinandergelegten Kartenschichten (1A, 1A*, 1B, 1B*) in eine Laminationspresse, wo die Kartenschichten (1A, 1A*, 1B, 1B*) unter Druck und Wärme miteinander verbunden werden,
**dadurch gekennzeichnet, daß**
mit einem thermoplastischen Klebstoff beschichtete Deckschichten (1B, 1B*) verwendet werden, deren Klebstoffbeschichtung (1B0, 1B0*) mindestens einen die Reibung zwischen der Deckschicht (1B, 1B*) und dem bedruckten Kartenkern (1) während der Lamination erhöhenden Zusatzstoff (Z) aufweisen, so daß eine Verschiebung des bedruckten Kartenkerns (1) gegenüber den Deckschichten (1B, 1B*) verhindert wird.

2. Verfahren nach Anspruch 1,
**dadurch gekennzeichnet, daß**
eine klebstoffbeschichtete Deckschicht (1B, 1B*) verwendet wird, deren Klebstoffbeschichtung (1B0, 1B0*) als Zusatzstoff (Z) Silica (SiO2) aufweist.

3. Verfahren nach Anspruch 1 oder 2,
daddurch gekennzeichnet, daß
eine klebstoffbeschichtete Deckschicht (1B, 1B*) verwendet wird, deren Klebstoffbeschichtung (1B0, 1B0*) als Zusatzstoff (Z) Silikat aufweist.

4. Verfahren nach einem der Ansprüche 1 bis 3,
**dadurch gekennzeichnet, daß**
eine klebstoffbeschichtete Deckschicht (1B, 1B*) verwendet wird, deren Klebstoffbeschichtung (1B0, 1B0*) als Zusatzstoff (Z) Calciumcarbonat aufweist.

5. Verfahren nach einem der vorstehenden Ansprüche,
**dadurch gekennzeichnet, daß**
eine klebstoffbeschichtete Deckschicht (1B, 1B*) verwendet wird, wo der Gewichtsprzentanteil der Zusatzstoffe (Z) an der Klebstoffbeschichtung (1B0, 1B0*) zwischen 0,1% und 60% beträgt.

6. Klebstoffbeschichtete Deckschicht zur Verwendung bei der Herstellung von mehrschichtigen Ausweiskarten aus Kunststoff, wobei der klebstoffbeschichtete Deckschicht (1B, 1B*) im Laminationsverfahren auf dem bedruckten Kern (1) der herzustellenden Karte aufzubringen ist,
**dadurch gekennzeichnet, daß** die Klebstoffbeschichtung (1B0, 1B0*) der Deckschicht (1B, 1B*) einen thermoplastischen Klebstoff und mindestens einen Zustatzstoff (Z) aufweist, der die Reibung zwischen der Deckschicht (1B, 1B*) und dem bedruckten Kartenkem (1) während der Lamination erhöht.

7. Klebstoffbeschichtete Deckschicht nach Anspruch 6,
**dadurch gekennzeichnet, daß**
die Klebstoffbeschichtung (1B0, 1B0*) als Zusatzstoff (Z) Silica (SiO2) aufweist.

8. Klebstoffbeschichtete Deckschicht nach Anspruch 6 oder 7,
**dadurch gekennzeichnet, daß**
die Klebstoffbeschichtung (1B0, 1B0*) als Zusatzstoff (Z) Silikat aufweist.

9. Klebstoffbeschichtete Deckschicht nach Anspruch 6 bis 8,
**dadurch gekennzeichnet, daß**
die Klebstoffbeschichtung (1B0, 1B0*) als Zusatzstoff (Z) Calciumcarbonat aufweist.

10. Klebstoffbeschichtete Deckschicht nach einem der Ansprüche 6 bis 9,
**dadurch gekennzeichnet, daß**
die Klebstoffbeschichtung (1B0, 1B0*) eine Dicke zwischen 0,1µm und 20µm aufweist.

11. Klebstoffbeschichtete Deckschicht nach einem der Ansprüche 6 bis 10,
**dadurch gekennzeichnet, daß**
die Klebstoffbeschichtung (1B0, 1B0*) eine Oberflächenrauhigkeit aufweist.

## Claims

1. A method for the production of a multi-layer identity card of plastic, the card to be produced comprising at least one card core (1) of a single piece card core layer (1A) printed on either side or at least two card core layers (1A and 1A*), which are respectively printed on one side, and on the printed sides of the card core (1) a covering layer (1B and 1B0*) coated with adhesive on one side is to be applied, comprising the following method steps:
a) preparing an integral card core layer (1A) printed on either side or of card core layers (1A and 1A*) printed on one side,
b) preparing the adhesive coated covering layers (1A and 1B*),
c) placing said card core layers (1A, 1A*, 1B and 1B*) on top of each other in register, and
d) introducing the card layers (1A, 1A*, 1B and 1B*) placed on top of one another in register into a laminating press, wherein the card layers (1A, 1A*, 1B and 1B*) are bonded together under the action of pressure and heat,
**characterized in that**
covering layers (1B and 1B*) coated with a thermoplastic adhesive are used, whose adhesive coating (1B0 and 1B0*) possesses at least one additive (Z) increasing the friction between the covering layer (1B and 1B*) and the printed card core (1) during lamination so that a displacement of the printed card core (1) in relation to the covering layers (1B and 1B*) is prevented.

2. The method as set forth in claim 1, **characterized in that** an adhesive coated covering layer (1B and 1B*) is employed, whose adhesive coating (1B0 and 1B0*) has silica (SiO₂) as an additive (Z).

3. The method as set forth in claim 1 or in claim 2, **characterized in that** an adhesive coated covering layer (1B and 1B*) is employed, whose adhesive coating (1B0 and 1B0*) has silicate as an additive (Z).

4. The method as set forth in any one of claims 1 through 3, **characterized in that** an adhesive coated covering layer (1B and 1B*) is employed, whose adhesive coating (1B0 and 1B0*) has calcium carbonate as an additive (Z).

5. The method as set forth in any one of the preceding claims, **characterized in that** an adhesive coated covering layer (1B and 1B*) is utilized in which the percentage by weight of the additives (Z) in the adhesive coating (1B0 and 1B0*) amounts to between 0,1% and 60%.

6. An adhesive coated covering layer for use in the manufacture of multi-layer identity cards of plastic, in the case of which the adhesive coated covering layer (1B and 1B*) is to be applied to the printed core (1) of the card to be produced by lamination, **characterized in that** the adhesive coating (1B0 and 1B0*) of the covering layer (1B and 1B*) comprises a thermoplastic adhesive and at least one additive (Z) increasing friction between the covering layer (1B and 1B*) and the printed card core (1) during said lamination.

7. The adhesive coated covering layer as set forth in claim 6, **characterized in that** the adhesive coating (1B0 and 1B0*) contains silica (SiO₂) as an additive (Z).

8. The adhesive coated covering layer as set forth in claim 6 or in claim 7, **characterized in that** the adhesive coating (1B0 and 1B0*) contains silicate as an additive (Z).

9. The adhesive coated covering layer as set forth in any one of claims 6 through 8, **characterized in that** the adhesive coating (1B0 and 1B0*) contains calcium carbonate as an additive (Z).

10. The adhesive coated covering layer as set forth in any one of claims 6 through 9, **characterized in that** the adhesive coating (1B0 and 1B0*) has a thickness between 0,1 µm and 20 µm.

11. The adhesive coated covering layer as set forth in any one of claims 6 through 10, **characterized by** a superficial roughness of the adhesive coating (1B0 and 1B0*).

## Revendications

1. Procédé de fabrication d'une carte d'identité multicouches en matière plastique, dans lequel la carte à fabriquer présente au moins une partie centrale de carte (1) faite d'une couche de partie centrale de carte (1A) d'une seule pièce imprimée des deux côtés ou d'au moins deux couches de partie centrale de carte (1A, 1A*) qui sont imprimés chacune d'un seul côté, une couche de recouvrement revêtue d'adhésif (1B, 1B0*) devant être appliquée d'un seul côté sur la face imprimée de la partie centrale de carte (1), ledit procédé comprenant les étapes suivantes :
a) préparation de la couche de partie centrale de carte (1A) d'une seule pièce imprimée des deux côtés ou des couches de partie centrale de carte (1A, 1A*) imprimées d'un seul coté,
b) préparation des couches de recouvrement revêtues d'adhésif (1B, 1B*),
c) superposition de ces couches de carte (1A, 1A*, 1B, 1B*) avec un positionnement précis,
d) introduction des couches de carte (1A, 1A*, 1B, 1B*) superposées avec un positionnement précis dans une presse de stratification où les couches de carte (1A, 1A*, 1B, 1B*) sont reliées les unes aux autres sous l'action de la pression et de la chaleur,
**caractérisé en ce que** l'on utilise des couches de recouvrement (1B, 1B*) revêtues d'un adhésif thermo-plastique dont le revêtement adhésif (1B0, 1B0*) présente au moins un additif (Z) qui augmente le frottement entre la couche de recouvrement (1B, 1B*) et la partie centrale de carte (1) imprimée pendant la stratification de façon à éviter un décalage de la partie centrale de carte (1) imprimée par rapport aux couches de recouvrement (1B, 1B*).

2. Procédé selon la revendication 1, **caractérisé en ce que** l'on utilise une couche de recouvrement (1B, 1B*) revêtue d'adhésif dont le revêtement adhésif (1B0, 1B0*) présente de la silice (SiO₂) en tant qu'additif (Z).

3. Procédé selon la revendication 1 ou la revendication 2, **caractérisé en ce que** l'on utilise une couche de recouvrement (1B, 1B*) revêtue d'adhésif dont le revêtement adhésif (1B0, 1B0*) présente du silicate en tant qu'additif (Z) .

4. Procédé selon l'une des revendications 1 à 3, **caractérisé en ce que** l'on utilise une couche de recouvrement (1B, 1B*) revêtue d'adhésif dont le revêtement adhésif (1B0, 1B0*) présente du carbonate de calcium en tant qu'additif (Z).

5. Procédé selon l'une des revendications précédentes, **caractérisé en ce que** l'on utilise une couche de recouvrement (1B, 1B*) revêtue d'adhésif dans laquelle le pourcentage en poids des additifs (Z) se situe dans la plage de 0,1% à 60%, ramené au revêtement adhésif (1B0, 1B0*).

6. Couche de recouvrement revêtue d'adhésif destinée à être utilisée dans la fabrication de cartes d'identité multicouches en matière plastique, dans laquelle la couche de recouvrement revêtue d'adhésif (1B, 1B*) doit être appliquée suivant un procédé de stratification sur la partie centrale (1) imprimée de la carte à fabriquer, **caractérisée en ce que** le revêtement adhésif (1B0, 1B0*) de la couche de recouvrement (1B, 1B*) présente au moins un adhésif thermoplastique et un additif (Z) qui augmente le frottement entre la couche de recouvrement (1B, 1B*) et la partie centrale de carte (1) imprimée pendant la stratification.

7. Couche de recouvrement revêtue d'adhésif selon la revendication 6, **caractérisée en ce que** le revêtement adhésif (1B0, 1B0*) présente de la silice (SiO₂) en tant qu'additif (Z).

8. Couche de recouvrement revêtue d'adhésif selon la revendication 6 ou la revendication 7, **caractérisée en ce que** le revêtement adhésif (1B0, 1B0*) présente du silicate en tant qu'additif (Z).

9. Couche de recouvrement revêtue d'adhésif selon l'une des revendications 6 à 8, **caractérisée en ce que** le revêtement adhésif (1B0, 1B0*) présente du carbonate de calcium en tant qu'additif (Z).

10. Couche de recouvrement revêtue d'adhésif selon l'une des revendications 6 à 9, **caractérisée en ce que** le revêtement adhésif (1B0, 1B0*) présente une épaisseur dans la plage de 0,1 µm à 20 µm.

11. Couche de recouvrement revêtue d'adhésif selon l'une des revendications 6 à 10, **caractérisée en ce que** le revêtement adhésif (1B0, 1B0*) présente une rugosité de surface.
